# EUROPÄISCHE PATENTANMELDUNG

(11) **EP 3 401 581 A1**
(43) Veröffentlichungstag der Anmeldung: **14.11.2018**
(21) Anmeldenummer: 18166391.5
(22) Anmeldetag: 09.04.2018
(51) Int. Cl.: F16L 3/137, F16L 3/14, F16B 2/08, F16L 33/14

(54) **HALTEVORRICHTUNG**

(30) Priorität: 11.05.2017 DE 102017110220
(71) Anmelder: Reichle & De-Massari AG, 8620 Wetzikon (CH)
(72) Erfinder: Di Domenico, Maurizio, 8306 Brüttisellen (CH); Keiser, Michael, 8610 Uster (CH)
(74) Vertreter: Daub, Thomas

(57) **Zusammenfassung**

Die Erfindung geht aus von einer Haltevorrichtung, welche zu einer Halterung zumindest eines länglichen Körpers (10) vorgesehen ist, mit zumindest einem, zumindest abschnittsweise formveränderbaren Halteelement (12), welches einen Aufnahmebereich (14) für den länglichen Körper (10) zumindest teilweise definiert und in zumindest einem montierten Zustand dazu vorgesehen ist, den länglichen Körper (10) zumindest teilweise zu umschlingen.

Um eine gattungsgemäße Vorrichtung mit vorteilhaften Eigenschaften hinsichtlich einer Halterung bereitzustellen, wird vorgeschlagen, dass die Haltevorrichtung zumindest eine Zugerzeugungseinheit (16) aufweist, welche dazu vorgesehen ist, durch ein Aufwickeln zumindest eines Teils des Halteelements (12) eine Zugkraft zur Halterung des länglichen Körpers (10) zu erzeugen.

## Beschreibung

### Stand der Technik

Die Erfindung betrifft eine Haltevorrichtung nach dem Oberbegriff des Anspruchs 1 und ein Verfahren zur Montage eines länglichen Körpers in einer Haltevorrichtung nach dem Oberbegriff des Anspruchs 15.

Haltevorrichtungen, welche zu einer Halterung von länglichen Körpern, beispielsweise Kabeln und/oder Einblasrohren, vorgesehen sind, sind bereits aus dem Stand der Technik bekannt.

Die Aufgabe der Erfindung besteht insbesondere darin, eine gattungsgemäße Vorrichtung mit vorteilhaften Eigenschaften hinsichtlich einer Halterung bereitzustellen. Die Aufgabe wird insbesondere durch die Merkmale der Patentansprüche 1 und 15 gelöst, während vorteilhafte Ausgestaltungen und Weiterbildungen der Erfindung den Unteransprüchen entnommen werden können.

### Vorteile der Erfindung

Die Erfindung geht aus von einer Haltevorrichtung, welche zu einer, insbesondere zug-, stoß-, biege- und/oder torsionsentlastenden, Halterung zumindest eines länglichen Körpers vorgesehen ist, mit zumindest einem, zumindest abschnittsweise formveränderbaren Halteelement, welches einen Aufnahmebereich für den länglichen Körper zumindest teilweise definiert und in zumindest einem montierten Zustand dazu vorgesehen ist, den länglichen Körper zumindest teilweise zu umschlingen.

Es wird vorgeschlagen, dass die Haltevorrichtung zumindest eine Zugerzeugungseinheit aufweist, welche dazu vorgesehen ist, durch ein Aufwickeln zumindest eines Teils des Halteelements eine Zugkraft zur Halterung des länglichen Körpers zu erzeugen.

Hierdurch können vorteilhafte Eigenschaften hinsichtlich einer Halterung, insbesondere des länglichen Körpers, erzielt werden. Insbesondere kann mittels der Halterung eine vorteilhafte Zugentlastung und/oder Stoßentlastung ermöglicht werden. Zudem kann vorteilhaft eine Torsion und/oder ein starkes Verbiegen des länglichen Körpers, insbesondere in dem Teil des länglichen Körpers, welcher im montierten Zustand im Aufnahmebereich und/oder in einer Längsrichtung des Aufnahmebereichs hinter dem Aufnahmebereich angeordnet ist, verhindert werden. Vorteilhaft kann, insbesondere durch ein Aufwickeln des den länglichen Körper umschlingenden Halteelements, eine Zugkraft zur Halterung unterschiedlicher länglicher Körper mit unterschiedlichen Formen und/oder Größen ermöglicht werden. Dadurch kann vorteilhaft ein großes Einsatzgebiet erschlossen werden. Zudem kann vorteilhaft eine hohe Flexibilität erreicht werden. Vorteilhaft kann eine Zugkraft, insbesondere inkrementell, dosiert werden. Dadurch kann vorteilhaft ein guter Halt ermöglicht werden. Zudem kann vorteilhaft eine Beschädigung des länglichen Körpers, beispielsweise durch eine zu große Kraft, vermieden werden. Außerdem kann vorteilhaft eine einfache Montage und/oder Demontage, insbesondere mittels eines Auf- und/oder Abwickelns, ermöglicht werden. Weiterhin kann mittels eines Aufwickelns vorteilhaft eine platzsparende und/oder kompakte Bauweise ermöglicht werden.

Unter einem "länglichen Körper" soll insbesondere ein Körper verstanden werden, der eine Länge aufweist, die zumindest doppelt, vorteilhaft zumindest viermal und vorzugsweise zumindest achtmal so groß ist wie dessen Durchmesser, der insbesondere quer zur Länge gemessen ist. Insbesondere sind Ausgestaltungen des länglichen Körpers als Rohr, insbesondere als Einblasrohr, als Schlauch, vorzugsweise als Kabel, insbesondere als Glasfaserkabel, denkbar. Unter der Wendung "zumindest abschnittsweise formveränderbar" soll insbesondere verstanden werden, dass ein Bauteil auf zumindest 30 % seiner Gesamterstreckung, vorzugsweise auf zumindest 50 % seiner Gesamterstreckung, vorteilhaft auf zumindest 75 % seiner Gesamterstreckung, bevorzugt auf zumindest 90 % seiner Gesamterstreckung oder besonders bevorzugt auf seiner vollständigen Gesamterstreckung formveränderbar ist, wobei insbesondere die formveränderbaren Bereiche auch unzusammenhängend ausgebildet sein können. Ein "formveränderbares Halteelement" kann insbesondere als zumindest ein flaches Band und/oder als ein weiteres, insbesondere längliches, biegeschlaffes und/oder flaches Element verstanden werden. Vorteilhaft kann durch eine flache Ausführung des Halteelements die Zugkraft zur Halterung des länglichen Körpers gleichmäßig über eine große Angriffsfläche verteilt werden. Vorteilhaft kann dadurch eine gleichmäßige Belastung des länglichen Körpers im montierten Zustand erreicht werden, wodurch vorteilhaft, insbesondere empfindliche Bestandteile länglicher Körper, wie beispielsweise Glasfasern, geschont und/oder Beschädigungen vermieden werden können. Vorzugsweise besteht das Halteelement aus einem Material mit einer relativ hohen Kriechfestigkeit. Insbesondere erfährt das Halteelement im montierten Zustand eine maximale Längenveränderung von 0,1 %, vorzugsweise von maximal 0,5 %, bevorzugt um maximal 1 % pro Jahr. Insbesondere besteht das Halteelement zumindest teilweise, vorzugsweise vollständig, aus einem Kunststoff und/oder bevorzugt zumindest teilweise, besonders bevorzugt vollständig aus einem Metall, beispielsweise aus Messing. Insbesondere ist vorstellbar, dass das formveränderbare Halteelement einstückig und/oder einteilig ausgebildet ist. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Walzverfahren hergestellt. Alternativ ist vorstellbar, dass das formveränderbare Halteelement als zumindest ein formelastisches Halteelement, beispielsweise ein Gummiband, ausgebildet ist. Unter der Wendung "zumindest teilweise umschlingen" soll insbesondere verstanden werden, dass ein Bauteil, vorzugsweise das Halteelement, zumindest 30 %, vorzugsweise zumindest 40 %, bevorzugt zumindest 50 % oder besonders bevorzugt zumindest 70 % eines Umfangs eines weiteren Bauteils, vorzugsweise des länglichen Körpers, umgreift. Unter einer "Zugkraft zur Halterung" soll insbesondere eine Kraft verstanden werden, welche im Wesentlichen senkrecht zu einer Längsrichtung des Aufnahmebereichs, insbesondere zu einer Längsrichtung des länglichen Körpers, wirkt. Vorzugsweise wirkt die Zugkraft zumindest im Wesentlichen in Richtung der Zugerzeugungseinheit. Vorteilhaft wird der längliche Körper durch die Zugkraft gegen eine Basiseinheit der Haltevorrichtung gepresst. Insbesondere bilden das Halteelement und die Basiseinheit zusammen den Aufnahmebereich für den länglichen Körper vollständig aus. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Haltevorrichtung zumindest eine Basiseinheit aufweist, welche zumindest eine Haltefläche aufweist, die zu einem Anpressen des länglichen Körpers im montierten Zustand durch das Halteelement vorgesehen ist. Vorteilhaft kann dadurch eine vorteilhafte Fixierung des länglichen Körpers an einer vorgegebenen Position ermöglicht werden. Zudem kann vorteilhaft eine hohe Stabilität erreicht werden. Vorteilhaft bilden die Haltefläche und das Halteelement gemeinsam den Aufnahmebereich zu einem Großteil aus. Unter "den Aufnahmebereich zu einem Großteil ausbilden" soll insbesondere verstanden werden, dass mehr als 80 %, vorzugsweise mehr als 90 % oder bevorzugt 100 % eines Umfangs des länglichen Körpers durch das Halteelement und/oder die Haltefläche umschlossen sind. Insbesondere weist der Aufnahmebereich eine Längsrichtung auf. Die Längsrichtung des Aufnahmebereichs verläuft insbesondere parallel zu einer Längsrichtung des länglichen Körpers im montierten Zustand. Insbesondere verläuft die Längsrichtung des Aufnahmebereichs im Wesentlichen parallel zu einer Rotationsachse der Zugerzeugungseinheit. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einem "Anpressen" soll insbesondere eine im montierten Zustand dauerhaft wirkende Kraft verstanden werden, welche vorzugsweise im Wesentlichen senkrecht zu der Haltefläche, in Richtung der Haltefläche wirkt. Insbesondere weist die Haltefläche eine im Wesentlichen konkave Krümmung auf, welche sich insbesondere von einem Rand der Haltefläche zu einem weiteren gegenüberliegenden Rand der Haltefläche, vorzugsweise über eine gesamte Quererstreckung der Haltefläche, erstreckt. Insbesondere berührt die Haltefläche im montierten Zustand zumindest teilweise eine Oberfläche des länglichen Körpers. Unter einem "zumindest teilweisen Berühren" soll insbesondere verstanden werden, dass zumindest 15 %, vorzugsweise zumindest 50 %, bevorzugt zumindest 75 % oder besonders bevorzugt zumindest 90 % der Gesamtfläche der Haltefläche die Oberfläche des länglichen Körpers direkt kontaktieren.

Weiterhin wird vorgeschlagen, dass die Basiseinheit zumindest eine, insbesondere senkrecht zu einer Längsrichtung des länglichen Körpers verlaufende, vorzugsweise durchgehende, Ausnehmung aufweist, welche dazu vorgesehen ist, im montierten Zustand zumindest einen Teil des Halteelements aufzunehmen. Vorteilhaft kann dadurch eine kompakte Bauweise ermöglicht werden. Insbesondere ist die Ausnehmung als ein Schlitz ausgebildet. Insbesondere ist die Ausnehmung dazu vorgesehen, einen Bereich der Basiseinheit auszubilden, welcher im montierten Zustand dazu vorgesehen ist, zumindest teilweise von dem Halteelement umschlungen zu werden. Insbesondere ist die Ausnehmung zwischen der Haltefläche und einem Wickelelement der Zugerzeugungseinheit angeordnet. Vorzugsweise umschlingt das Halteelement im montierten Zustand den länglichen Körper und einen Teil der Basiseinheit zumindest teilweise. Dadurch kann vorteilhaft ein fester Halt des länglichen Körpers an der Basiseinheit erzeugt werden. Zudem kann dadurch vorteilhaft im montierten Zustand eine der Zugkraft zur Halterung des länglichen Körpers zumindest teilweise entgegengerichtete Druckkraft auf zumindest einen Teil einer Oberfläche der Ausnehmung, insbesondere durch ein zumindest teilweises Aufwickeln des Halteelements, erzeugt werden, wodurch vorteilhaft eine vorteilhafte Kraftverteilung erreicht werden kann. Außerdem kann vorteilhaft eine einfache Montage und/oder Demontage ermöglicht werden, insbesondere mittels eines vollständigen Ein- und/oder Ausfädelns des Halteelements in und/oder aus der Ausnehmung. Dadurch kann vorteilhaft eine, insbesondere nachträgliche, Montierbarkeit mit bereits verlegten und/oder bereits bestehenden länglichen Körpern, insbesondere Kabel- und/oder Rohrverbindungen, ermöglicht werden. Vorzugsweise weist die Ausnehmung zumindest eine, bevorzugt zwei scharfkantige Ecken auf, über welche im montierten Zustand das Halteelement gespannt ist. Dadurch kann vorteilhaft eine Selbsthemmung des Halteelements im montierten Zustand erhöht werden.

Außerdem wird vorgeschlagen, dass die Haltefläche, insbesondere entlang zumindest zweier zueinander senkrecht stehender Oberflächenrichtungen des Aufnahmebereichs, zumindest eine, insbesondere rippenförmige, Strukturierung aufweist, welche dazu vorgesehen ist, im montierten Zustand den länglichen Körper gegen ein Verrutschen und/oder ein Verdrehen zu sichern. Vorteilhaft kann dadurch ein guter Halt des länglichen Körpers in der Haltevorrichtung ermöglicht werden. Zudem kann mittels der Strukturierung vorteilhaft ein Verrutschen, insbesondere entlang einer Längsrichtung des Aufnahmebereichs, verhindert werden. Insbesondere besteht die Strukturierung aus einem Material, welches eine höhere Härte aufweist als ein Oberflächenmaterial des länglichen Körpers. Insbesondere ist die Strukturierung dazu vorgesehen, im montierten Zustand zumindest teilweise eine Oberflächenform des länglichen Körpers zu verändern, beispielsweise mittels eines Eindrückens hervorstehender Bereiche der Strukturierung in ein Oberflächenmaterial des länglichen Körpers, wodurch vorteilhaft, insbesondere zusätzlich zu einem Kraftschluss, ein Formschluss erzeugt werden kann. Dadurch kann vorteilhaft ein vorteilhafter Schutz des länglichen Körpers gegen Zug, Stoß, Biegung und/oder Torsion geschaffen werden. Die Strukturierung weist insbesondere eine regelmäßig und/oder unregelmäßig wiederkehrende Form auf. Alternativ kann die Strukturierung auch eine Kombination mehrerer Formen und/oder eine zufällige Anordnung von Formen, beispielsweise eine erhöhte Oberflächenrauigkeit, aufweisen. Beispielsweise kann die Form zumindest teilweise rippenförmig, dreiecksförmig, polyederförmig, noppenförmig und/oder lamellenförmig ausgebildet sein und/oder eine weitere, dem Fachmann für eine Verrutschsicherung geeignet erscheinende Form aufweisen.

Des Weiteren wird vorgeschlagen, dass die Zugerzeugungseinheit zumindest ein Wickelelement aufweist, welches dazu vorgesehen ist, bei einem Auf- und/oder Abwickeln des Halteelements um eine Rotationsachse des Wickelelements zumindest einen Teil des Halteelements aufzunehmen. Dadurch kann vorteilhaft eine kompakte Bauweise ermöglicht werden. Vorteilhaft kann mittels eines Auf- und/oder Abwickelns eine Bedienerfreundlichkeit verbessert werden, insbesondere durch eine vorteilhafte Ermöglichung einer werkzeuglosen Montage und/oder Demontage. Zudem kann vorteilhaft eine zerstörungsfreie Demontage ermöglicht werden, wodurch vorteilhaft eine mehrfache Verwendbarkeit erreicht werden kann. Unter einem "Wickelelement" soll insbesondere ein Element verstanden werden, welches dazu vorgesehen ist, zumindest teilweise von dem Halteelement umschlungen zu werden, wobei insbesondere ein Umschlingungsgrad des Wickelelements mittels einer Rotationsbewegung des Wickelelements vorteilhaft variierbar ist. Insbesondere ist denkbar, dass das Wickelelement zumindest teilweise als eine Spule, als eine Haspel, als eine Spindel und/oder als ein Exzenter ausgebildet ist. Es ist vorstellbar, dass die Zugerzeugungseinheit zumindest ein Bedienelement umfasst. Insbesondere bietet das Bedienelement eine Angriffsfläche für einen Benutzer, insbesondere zu einem, vorzugsweise werkzeuglosen, Rotieren des Wickelelements. Das Bedienelement kann beispielsweise als ein Hebel, als ein Drehrad, als Kraftübertragungsfläche für ein Werkzeug und/oder als ein Kreuzgriff ausgebildet sein.

Zudem wird vorgeschlagen, dass das Wickelelement um die Rotationsachse drehbar an der Basiseinheit gelagert ist. Alternativ ist vorstellbar, dass das Wickelelement exzentrisch um die Drehachse drehbar gelagert ist. Dadurch kann vorteilhaft eine kompakte Bauweise ermöglicht werden. Zudem kann vorteilhaft, insbesondere mittels der Lagerung des Wickelelements an der Basiseinheit, über die Zugerzeugungseinheit eine Zugkraft relativ zu der Basiseinheit erzeigt werden.

Wenn das Wickelelement zumindest ein Montageelement zumindest zu einer Aufnahme und/oder Befestigung zumindest eines Teils des Halteelements aufweist, kann vorteilhaft eine effektive Übertragung und/oder Umwandlung einer Rotationsbewegung des Wickelelements in eine Zugkraft zur Halterung des länglichen Körpers erreicht werden. Zudem kann vorteilhaft eine einfache Montage und/oder eine einfache Handhabung der Zugerzeugungseinheit ermöglicht werden, wodurch vorteilhaft eine hohe Zuverlässigkeit der Haltevorrichtung erreicht werden kann. Insbesondere umfasst der Teilbereich des Halteelements, welchen das Montageelement befestigt und/oder welchen das Montageelement aufnimmt, zumindest ein Ende des Halteelements.

Ferner wird vorgeschlagen, dass die Rotationsachse des Wickelelements zumindest im Wesentlichen parallel zu einer Längsrichtung des Aufnahmebereichs verläuft. Dadurch kann vorteilhaft eine kompakte Bauweise ermöglicht werden, wodurch vorteilhaft eine dichte Packbarkeit mehrerer Haltevorrichtungen auf einem begrenzten Raum ermöglicht werden kann. Zudem kann vorteilhaft ein platzsparendes Aufrollen ermöglicht werden.

Außerdem wird vorgeschlagen, dass im montierten Zustand die Rotationsachse des Wickelelements wesentlich von dem Aufnahmebereich beabstandet ist. Dadurch kann vorteilhaft eine einfache Montage und/oder Demontage der Haltevorrichtung ermöglicht werden. Zudem können vorteilhaft gute Kräfteverhältnisse geschaffen werden. Unter der Wendung "wesentlich beabstandet" soll insbesondere verstanden werden, dass ein minimaler Abstand zwischen der Rotationsachse und dem Aufnahmebereich wenigstens 0,5 cm, vorzugsweise wenigstens 1 cm oder bevorzugt wenigstens 1,5 cm beträgt. Alternativ oder zusätzlich ist vorstellbar, dass der minimale Abstand zwischen der Rotationsachse und dem Aufnahmebereich wenigstens einer, parallel zu dem minimalen Abstand verlaufenden, Erstreckung des Aufnahmebereichs im montierten Zustand entspricht.

Weiterhin wird vorgeschlagen, dass die Zugerzeugungseinheit zumindest eine Positionssicherungseinheit aufweist, welche dazu vorgesehen ist, ein Abwickeln des Halteelements in zumindest einem Betriebszustand zu verhindern. Dadurch kann vorteilhaft ein fester Halt des länglichen Körpers in dem Aufnahmebereich ermöglicht werden. Zudem kann vorteilhaft eine über einen langen, insbesondere sich über Jahre erstreckenden, Zeitraum im Wesentlichen gleich bleibende Zugkraft zur Halterung des länglichen Körpers erreicht werden. Außerdem kann vorteilhaft ein selbstständiges Lösen des länglichen Körpers von der Haltevorrichtung vermieden werden. Zudem kann vorteilhaft ein einfaches Einstellen einer bestimmten Zugkraft zur Halterung des länglichen Körpers ermöglicht werden. Unter einer "Positionssicherungseinheit" soll insbesondere eine Einheit verstanden werden, welche eine, insbesondere durch einen Benutzer unbeabsichtigte, Rotationsbewegung des Wickelelements, insbesondere in eine Abwickelrichtung, im Wesentlichen verhindert. Insbesondere hält die Positionssicherungseinheit das Wickelelement fest in einer vorgegebenen Position, insbesondere einer vorgegebenen Drehposition. Unter einer "Abwickelrichtung soll insbesondere eine Drehrichtung des Wickelelements verstanden werden, welche im montierten Zustand eine Verringerung der Zugkraft zur Halterung des länglichen Körpers bewirkt. Vorzugsweise umfasst die Positionssicherungseinheit zumindest ein Sperrelement, welches insbesondere eine Positionssicherung mittels eines Formschlusses erzeugt. Insbesondere ist denkbar, dass die Positionssicherungseinheit zumindest ein Sperrrad und/oder zumindest eine Sperrklinke aufweist.

Wenn die Positionssicherungseinheit eine Ratsche aufweist, kann vorteilhaft ein fester Halt des länglichen Körpers in dem Aufnahmebereich ermöglicht werden. Zudem kann vorteilhaft eine über einen langen, insbesondere sich über Jahre erstreckenden, Zeitraum im Wesentlichen gleich bleibende Zugkraft zur Halterung des länglichen Körpers erreicht werden. Außerdem kann vorteilhaft ein selbstständiges Lösen des länglichen Körpers von der Haltevorrichtung vermieden werden. Zudem kann vorteilhaft ein einfaches, insbesondere stufenweises, Einstellen einer bestimmten Zugkraft zur Halterung des länglichen Körpers ermöglicht werden.

Ferner wird vorgeschlagen, dass im montierten Zustand zumindest ein Teilbereich des Halteelements, welcher von einem auf das Wickelelement aufgewickelten Teilbereich des Halteelements verschieden ist, mit einem weiteren Teilbereich des Halteelements, welcher von dem Teilbereich und von dem auf das Wickelelement aufgewickelten Teilbereich verschieden ist, überlappt. Dadurch kann vorteilhaft ein Kraftschluss, insbesondere ein Reibschluss, erzeugt werden, welcher einen sicheren und festen Halt des länglichen Körpers im montierten Zustand ermöglicht. Vorteilhaft kann eine Selbsthemmung des Halteelements, welche insbesondere einem Lösen des länglichen Körpers von der Haltevorrichtung entgegenwirkt, verbessert werden. Vorteilhaft kann eine Haltekraft unabhängig von zusätzlichen Teilen erzeugt werden. Insbesondere ist vorstellbar, dass der Teilbereich zumindest 10 %, vorzugsweise zumindest 15 %, bevorzugt zumindest 20 % oder besonders bevorzugt zumindest 30 % des Halteelements umfasst. Alternativ und/oder zusätzlich ist vorstellbar, dass zumindest 10 %, vorzugsweise zumindest 20 %, bevorzugt zumindest 30 % oder besonders bevorzugt zumindest 50 % des Aufnahmebereichs von, insbesondere zur Erzeugung eines Kraftschlusses, überlappenden Teilbereichen des Halteelements umschlossen sind.

Zudem wird eine Einhausung mit der Haltevorrichtung vorgeschlagen. Die Einhausung kann insbesondere als Kabelgehäuse, als Steckergehäuse, als Muffe und/oder als weitere, dem Fachmann als sinnvoll erscheinende Einhausung ausgebildet sein. Dadurch kann vorteilhaft ein Schutz vor Umgebungseinflüssen, wie Nässe und/oder Dreck, geschaffen werden. Außerdem kann vorteilhaft eine vorteilhafte Anordnung der Haltevorrichtung in einem Bauteil ermöglicht werden.

Außerdem wird ein System mit zumindest einer Haltevorrichtung und mit dem länglichen Körper vorgeschlagen, womit vorteilhafte Eigenschaften hinsichtlich einer Halterung, insbesondere eines länglichen Körpers, erzielt werden können.

Des Weiteren wird ein Verfahren zur Montage eines länglichen Körpers in einer Haltevorrichtung vorgeschlagen, mit zumindest einem, zumindest abschnittsweise formveränderbaren Halteelement, durch welches den länglichen Körper zumindest teilweise umschlungen wird, wobei in zumindest einem Verfahrensschritt eine Zugkraft zur Halterung des länglichen Körpers durch ein Aufwickeln zumindest eines Teils des Halteelements erzeugt wird. Hierdurch können vorteilhafte Eigenschaften hinsichtlich einer Halterung, insbesondere des länglichen Körpers, erzielt werden.

Die Haltevorrichtung und/oder das Verfahren zur Montage eines Einblasrohrs sollen hierbei nicht auf die oben beschriebene Anwendung und Ausführungsform beschränkt sein. Insbesondere kann die Haltevorrichtung und/oder das Verfahren zur Montage eines Einblasrohrs zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, seitliche Ansicht eines Systems mit einer Haltevorrichtung und einem länglichen Körper,
- Fig. 2: einen Schnitt durch das System entlang einer Schnittachse A,
- Fig. 3: eine schematische, perspektivische Ansicht des Systems,
- Fig. 4: einen Schnitt durch das System entlang einer Schnittachse B,
- Fig. 5: eine schematische perspektivische Ansicht der Haltevorrichtung,
- Fig. 6: eine Einhausung mit der Haltevorrichtung und dem länglichen Körper und
- Fig. 7: ein Ablaufdiagramm eines Verfahrens zur Montage des länglichen Körpers in der Haltevorrichtung.

### Beschreibung des Ausführungsbeispiels

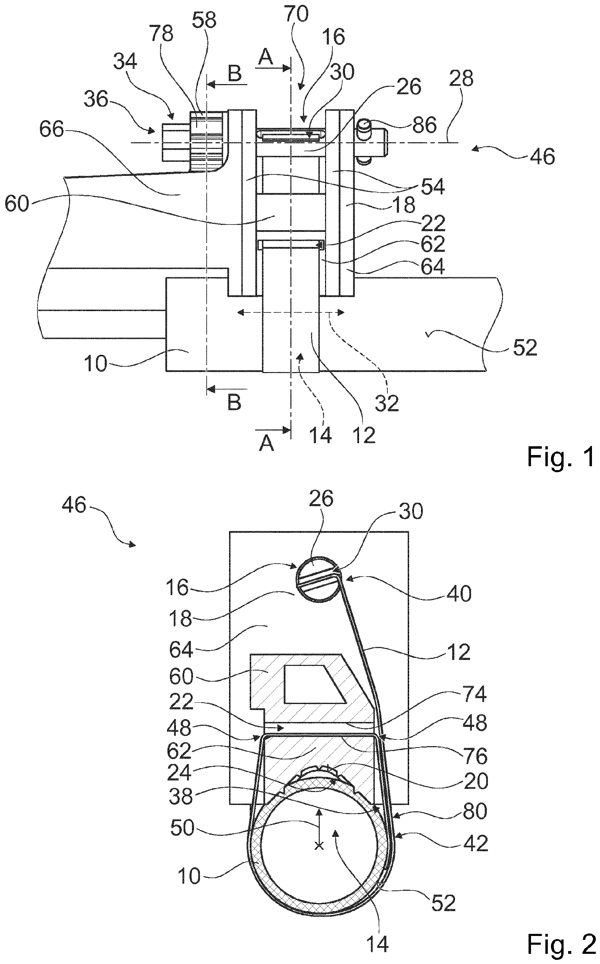

Fig. 1 zeigt ein System 46 mit einer Haltevorrichtung und mit einem länglichen Körper 10 in einem montierten Zustand. Der längliche Körper 10 ist als ein Rohr ausgebildet. Die Haltevorrichtung ist zu einer Halterung des länglichen Körpers 10 vorgesehen. Die Haltevorrichtung weist ein Halteelement 12 auf. Das Halteelement 12 ist formveränderbar ausgebildet. Das Halteelement 12 ist als ein flaches Metallband ausgebildet. Das Halteelement 12 definiert teilweise einen Aufnahmebereich 14 für den länglichen Körper 10 (vgl. Fig. 2). Das Halteelement 12 ist dazu vorgesehen, im montierten Zustand den länglichen Körper 10 teilweise zu umschlingen.

Die Haltevorrichtung weist eine Zugerzeugungseinheit 16 auf. Die Zugerzeugungseinheit 16 ist dazu vorgesehen, durch ein Aufwickeln eines Teils des Halteelements 12 eine Zugkraft zur Halterung des länglichen Körpers 10 zu erzeugen. Die Zugkraft zur Halterung wirkt im Wesentlichen entlang einer Zugkraftrichtung 50. Im montierten Zustand greift die Zugkraft an einer Oberfläche 52 des länglichen Körpers 10 an.

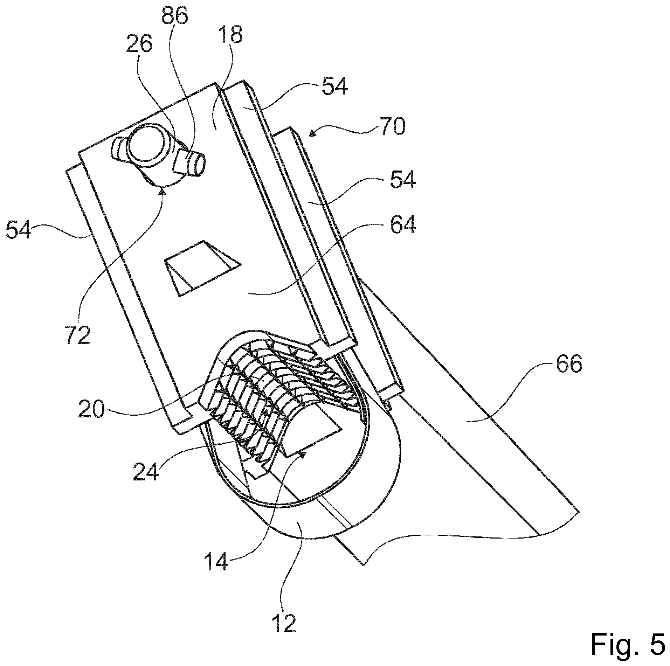

Die Haltevorrichtung weist eine Basiseinheit 18 auf. Die Basiseinheit 18 besteht zumindest teilweise aus einem Kunststoff. Die Basiseinheit 18 ist einstückig ausgebildet. Die Basiseinheit 18 weist eine Haltefläche 20 auf. Die Haltefläche 20 ist im montierten Zustand zu einem Anpressen des länglichen Körpers 10 vorgesehen. Das Halteelement 12 presst im montierten Zustand den länglichen Körper 10 gegen die Haltefläche 20. Die Haltefläche 20 ist konkav gewölbt. Die Haltefläche 20 bildet einen Teil einer äußeren, dem Rest der Basiseinheit 18 abgewandten, Oberfläche der Basiseinheit 18 aus. Die Haltefläche 20 weist eine Strukturierung 24 auf. Die Strukturierung 24 ist dazu vorgesehen, im montierten Zustand den länglichen Körper 10 gegen ein Verrutschen und/oder ein Verdrehen zu sichern. Die Strukturierung 24 greift im montierten Zustand durch Eindrücken in die Oberfläche 52 des länglichen Körpers 10 ein, wodurch vorteilhaft ein Quasi-Formschluss erzeugt werden kann. Die Strukturierung 24 weist ein Muster von senkrecht zueinander angeordneten rippenartig hervorstehenden Stegen auf, welche zum Teil parallel und zu einer Längsrichtung 32 des Aufnahmebereichs 14 verlaufen (vgl. Fig. 5).

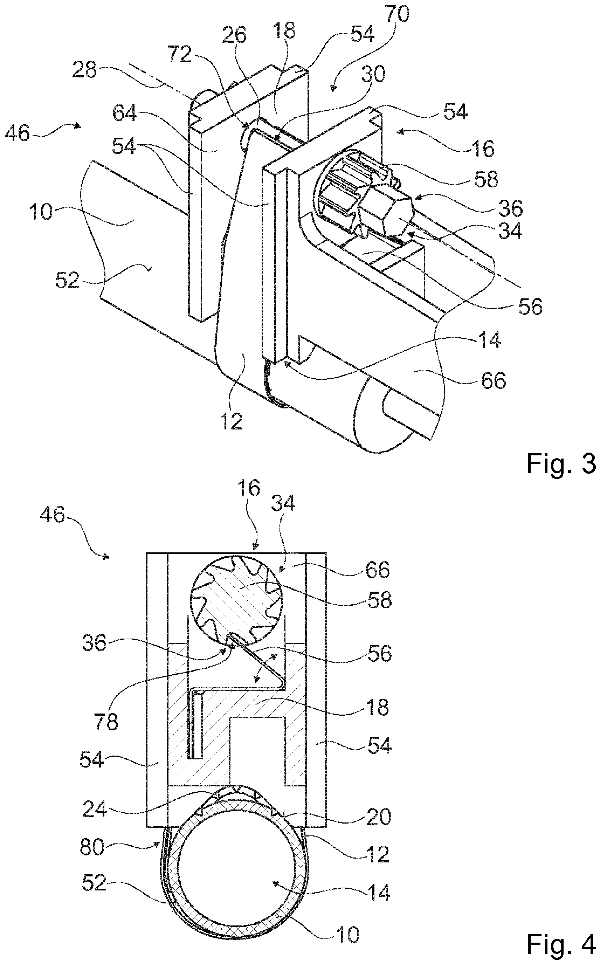

Die Basiseinheit 18 weist einen inneren Verbindungssteg 60 auf. Die Basiseinheit 18 weist einen äußeren Verbindungssteg 62 auf. Die Haltefläche 20 ist an dem äußeren Verbindungssteg 62 angeordnet. Die Basiseinheit 18 weist ein erstes Seitenteil 64 auf. Die Basiseinheit 18 weist ein zweites Seitenteil 66 auf. Die Verbindungsstege 60, 62 verbinden das erste Seitenteil 64 und das zweite Seitenteil 66. Das erste Seitenteil 64 weist eine Gleitführung 70 auf. Die Gleitführung 70 ist zu einer Positionierung der Basiseinheit 18 vorgesehen. Die Gleitführung 70 umfasst vier Führungsschienen 54 (vgl. Fig. 3). Die Führungsschienen 54 sind dazu vorgesehen, eine Einschub- und/oder Montagerichtung der Basiseinheit 18, insbesondere relativ zu einer Umgebung vorzugeben. Mittels der Gleitführung 70 kann die Haltevorrichtung vorteilhaft besonders exakt, insbesondere relativ zu einer Umgebung, ausgerichtet werden, insbesondere in Relation zu anderen Haltevorrichtungen. Dadurch kann vorteilhaft eine regelmäßige Positionierung von länglichen Körpern 10 mit verschiedenen Durchmessern ermöglicht werden. Vorzugsweise können Symmetrieachsen der verschiedenen länglichen Körper 10 vorteilhaft parallel und/oder auf einer gemeinsamen Ebene liegend zueinander ausgerichtet werden.

Die Zugerzeugungseinheit 16 weist ein Wickelelement 26 auf. Das Wickelelement 26 ist um eine Rotationsachse 28 drehbar an der Basiseinheit 18 gelagert. Alternativ kann das Wickelelement 26 exzentrisch um die Rotationsachse 28 drehbar gelagert sein. Die Rotationsachse 28 des Wickelelements 26 verläuft parallel zu der Längsrichtung 32 des Aufnahmebereichs 14. Die Rotationsachse 28 des Wickelelements 26 ist im montierten Zustand wesentlich von dem Aufnahmebereich 14 beabstandet.

Das erste Seitenteil 64 weist eine durchgehende Lagerausnehmung 72 (vgl. Fig. 3) zur Lagerung eines Teils des Wickelelements 26 auf. Das zweite Seitenteil 66 weist eine weitere durchgehende Lagerausnehmung (nicht gezeigt) zur Lagerung eines Teils der Wickelelements 26 auf.

Das Wickelelement 26 ist dazu vorgesehen, bei einem Auf- und/oder Abwickeln des Halteelements 12 um die Rotationsachse 28 einen Teil des Halteelements 12 aufzunehmen. Das Wickelelement 26 weist ein Montageelement 30 zu einer Aufnahme und/oder Befestigung eines Teils des Halteelements 12 auf. Das Montageelement 30 ist als ein das Wickelelement 26 durchstoßender Schlitz ausgebildet. Im montierten Zustand ist das Halteelement 12 durch das Montageelement 30 hindurch gefädelt. Die Zugerzeugungseinheit 16 weist ein Bedienelement 86 auf. Das Bedienelement 86 ist dazu vorgesehen, eine Angriffsfläche für einen Bediener bereitzustellen

Das Halteelement 12 weist im montierten Zustand zumindest einen von einem auf das Wickelelement 26 aufgewickelten Teilbereich 40 des Halteelements 12 verschiedenen Teilbereich 38 auf, welcher mit einem weiteren Teilbereich 42 des Halteelements 12, welcher von dem Teilbereich 38 und von dem auf das Wickelelement 26 aufgewickelten Teilbereich 40 verschieden ist, überlappt. Der Teilbereich 38 und der weitere Teilbereich 42 bilden einen Überlappungsbereich 80 aus. Der Überlappungsbereich 80 begrenzt teilweise den Aufnahmebereich 14.

Die Basiseinheit 18 weist eine Ausnehmung 22 auf. Die Ausnehmung 22 ist als durchgehender Schlitz ausgebildet. Die Ausnehmung 22 ist dazu vorgesehen, im montierten Zustand einen Teil des Halteelements 12 aufzunehmen. Im montierten Zustand ist das Halteelement 12 durch die Ausnehmung 22 vollständig hindurch gefädelt. Die Ausnehmung 22 weist eine rechteckige Querschnittsform auf. Die Seitenwände der Ausnehmung 22 sind eben. Die Ausnehmung 22 ist auf einer ersten Seite 74 von dem inneren Verbindungssteg 60 begrenzt. Die erste Seite 74 ist als eine Seitenwand der Ausnehmung 22 mit dem größten minimalen Abstand von dem Aufnahmebereich 14 ausgebildet. Die Ausnehmung 22 ist zu einer zweiten Seite 76 von dem äußeren Verbindungssteg 62 begrenzt. Die zweite Seite 76 ist als eine Seitenwand der Ausnehmung 22 mit einem kleinsten minimalen Abstand von dem Aufnahmebereich 14 ausgebildet. Im montierten Zustand liegt das Halteelement 12 eben auf der zweiten Seite 76 auf. Die Ausnehmung 22 weist an beiden Enden der zweiten Seite 76 eine scharfe Kante 48 auf. Mittels der scharfen Kante 48 kann vorteilhaft eine Selbsthemmung des Halteelements 12 im montierten Zustand erhöht werden. Dadurch kann vorteilhaft ein verbesserter Halt des länglichen Körpers 10 in der Haltevorrichtung erzielt werden.

Die Zugerzeugungseinheit 16 weist eine Positionssicherungseinheit 34 auf. Die Positionssicherungseinheit 34 ist dazu vorgesehen, ein Abwickeln des Halteelements 12 in zumindest einem Betriebszustand zu verhindern. Die Positionssicherungseinheit 34 weist eine Ratsche 36 auf. Die Positionssicherungseinheit 34 weist ein Sperrrad 58 auf. Das Sperrrad 58 weist eine Verzahnung 78 auf. Die Verzahnung 78 ist asymmetrisch ausgebildet. Die Positionssicherungseinheit 34 weist eine Sperrklinke 56 auf (vgl. Fig. 3 oder Fig. 4). Die Sperrklinke 56 greift in die Verzahnung 78 ein. Die Sperrklinke 56 ist als Stanz-/Blechbiegeteil ausgebildet. Die Sperrklinke 56 ist aus einem nach mäßiger Verbiegung zurückfedernden Material ausgebildet. Die Sperrklinke 56 blockiert das Sperrrad 58 in einer Drehrichtung, insbesondere in einer Abwickeldrehrichtung. Vorteilhaft kann das Sperrrad 58 ohne großen Kraftaufwand in eine Aufwickeldrehrichtung bewegt werden, während die Sperrklinke 56 ein Abwickeln in die entgegengesetzte Abwickeldrehrichtung blockiert, wodurch vorteilhaft eine Positionssicherung ermöglicht werden kann.

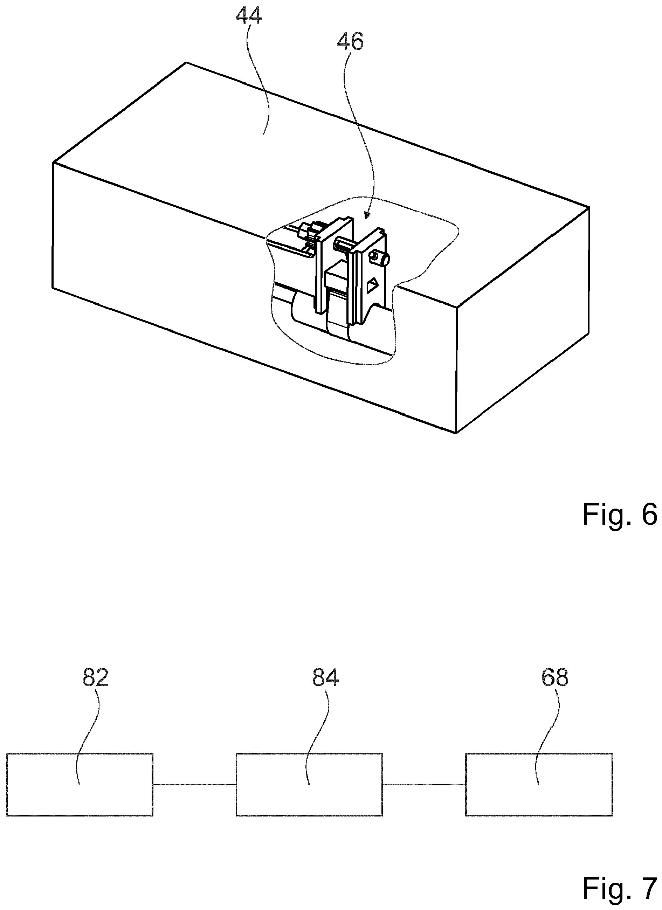

Fig. 6 zeigt eine Einhausung 44 mit der Haltevorrichtung und dem länglichen Körper 10. Die Einhausung 44 umgreift die Haltevorrichtung vollständig.

Bei einem Verfahren zur Montage eines länglichen Körpers 10 in einer Haltevorrichtung wird in zumindest einem Verfahrensschritt 82 (vgl. Fig. 7) der längliche Körper 10 durch das formveränderbare Halteelement 12 teilweise umschlungen. In zumindest einem Verfahrensschritt 84 wird das Halteelement 12 durch die Ausnehmung 22 gefädelt. In zumindest einem Verfahrensschritt 68 wird eine Zugkraft zur Halterung des länglichen Körpers 10 durch ein Aufwickeln eines Teils des Halteelements 12 erzeugt.

### Bezugszeichen

- 10: länglicher Körper
- 12: Halteelement
- 14: Aufnahmebereich
- 16: Zugerzeugungseinheit
- 18: Basiseinheit
- 20: Haltefläche
- 22: Ausnehmung
- 24: Strukturierung
- 26: Wickelelement
- 28: Rotationsachse
- 30: Montageelement
- 32: Längsrichtung
- 34: Positionssicherungseinheit
- 36: Ratsche
- 38: Teilbereich
- 40: aufgewickelter Teilbereich
- 42: weiterer Teilbereich
- 44: Einhausung
- 46: System
- 48: scharfe Kante
- 50: Zugkraftrichtung
- 52: Oberfläche
- 54: Führungsschiene
- 56: Sperrklinke
- 58: Sperrrad.
- 60: innerer Verbindungssteg
- 62: äußerer Verbindungssteg
- 64: erstes Seitenteil
- 66: zweites Seitenteil
- 68: Verfahrensschritt
- 70: Gleitführung
- 72: Lagerausnehmung
- 74: erste Seite
- 76: zweite Seite
- 78: Verzahnung
- 80: Überlappungsbereich
- 82: Verfahrensschritt
- 84: Verfahrensschritt
- 86: Bedienelement
- A: Schnittachse
- B: Schnittachse

## Patentansprüche

1. Haltevorrichtung, welche zu einer Halterung zumindest eines länglichen Körpers (10) vorgesehen ist, mit zumindest einem, zumindest abschnittsweise formveränderbaren Halteelement (12), welches einen Aufnahmebereich (14) für den länglichen Körper (10) zumindest teilweise definiert und in zumindest einem montierten Zustand dazu vorgesehen ist, den länglichen Körper (10) zumindest teilweise zu umschlingen, **gekennzeichnet durch** zumindest eine Zugerzeugungseinheit (16), welche dazu vorgesehen ist, durch ein Aufwickeln zumindest eines Teils des Halteelements (12) eine Zugkraft zur Halterung des länglichen Körpers (10) zu erzeugen.

2. Haltevorrichtung nach Anspruch 1, **gekennzeichnet durch** zumindest eine Basiseinheit (18), welche zumindest eine Haltefläche (20) aufweist, die zu einem Anpressen des länglichen Körpers (10) im montierten Zustand durch das Halteelement (12) vorgesehen ist.

3. Haltevorrichtung nach Anspruch 2, **dadurch gekennzeichnet, dass** die Basiseinheit (18) zumindest eine Ausnehmung (22) aufweist, welche dazu vorgesehen ist, im montierten Zustand zumindest einen Teil des Halteelements (12) aufzunehmen

4. Haltevorrichtung nach Anspruch 2 oder 3, **dadurch gekennzeichnet, dass** die Haltefläche (20) zumindest eine Strukturierung (24) aufweist, welche dazu vorgesehen ist, im montierten Zustand den länglichen Körper (10) gegen ein Verrutschen und/oder ein Verdrehen zu sichern.

5. Haltevorrichtung nach einem der vorhergehenden Ansprüche, **dadurch gekennzeichnet, dass** die Zugerzeugungseinheit (16) zumindest ein Wickelelement (26) aufweist, welches dazu vorgesehen ist, bei einem Auf- und/oder Abwickeln des Halteelements (12) um eine Rotationsachse (28) des Wickelelements (26) zumindest einen Teil des Halteelements (12) aufzunehmen.

6. Haltevorrichtung zumindest nach den Ansprüchen 2 und 5, **dadurch gekennzeichnet, dass** das Wickelelement (26) um die Rotationsachse (28) drehbar an der Basiseinheit (18) gelagert ist.

7. Haltevorrichtung nach Anspruch 5 oder 6, **dadurch gekennzeichnet, dass** das Wickelelement (26) zumindest ein Montageelement (30) zumindest zu einer Aufnahme und/oder Befestigung zumindest eines Teils des Halteelements (12) aufweist.

8. Haltevorrichtung nach einem der Ansprüche 5 bis 7, **dadurch gekennzeichnet, dass** die Rotationsachse (28) des Wickelelements (26) zumindest im Wesentlichen parallel zu einer Längsrichtung (32) des Aufnahmebereichs (14) verläuft.

9. Haltevorrichtung nach einem der Ansprüche 5 bis 8, **dadurch gekennzeichnet, dass** im montierten Zustand die Rotationsachse (28) des Wickelelements (26) wesentlich von dem Aufnahmebereich (14) beabstandet ist

10. Haltevorrichtung nach einem der vorhergehenden Ansprüche, **dadurch gekennzeichnet, dass** die Zugerzeugungseinheit (16) zumindest eine Positionssicherungseinheit (34) aufweist, welche dazu vorgesehen ist, ein Abwickeln des Halteelements (12) in zumindest einem Betriebszustand zu verhindern.

11. Haltevorrichtung nach Anspruch 10, **dadurch gekennzeichnet, dass** die Positionssicherungseinheit (34) eine Ratsche (36) aufweist.

12. Haltevorrichtung zumindest nach Anspruch 5, **dadurch gekennzeichnet, dass** im montierten Zustand zumindest ein Teilbereich (38) des Halteelements (12), welcher von einem auf das Wickelelement (26) aufgewickelten Teilbereich (40) des Halteelements (12) verschieden ist, mit einem weiteren Teilbereich (42) des Halteelements (12), welcher von dem Teilbereich (38) und von dem auf das Wickelelement (26) aufgewickelten Teilbereich (40) verschieden ist, überlappt.

13. Einhausung (44) mit der Haltevorrichtung nach einem der Ansprüche 1 bis 12.

14. System (46) mit zumindest einer Haltevorrichtung nach einem der Ansprüche 1 bis 12 und mit einem länglichen Körper (10).

15. Verfahren zur Montage eines länglichen Körpers (10) in einer Haltevorrichtung, insbesondere nach einem der Ansprüche 1 bis 12, mit zumindest einem, zumindest abschnittsweise formveränderbaren Halteelement (12), durch welches der längliche Körper (10) zumindest teilweise umschlungen wird, **dadurch gekennzeichnet, dass** in zumindest einem Verfahrensschritt (68) eine Zugkraft zur Halterung des länglichen Körpers (10) durch ein Aufwickeln zumindest eines Teils des Halteelements (12) erzeugt wird.
